Europäisches Patentamt

(19) European Patent Office

Office européen des brevets

(11) EP 0 678 353 B1

(12) **EUROPÄISCHE PATENTSCHRIFT**

(45) Veröffentlichungstag und Bekanntmachung des Hinweises auf die Patenterteilung:
**26.01.2000  Patentblatt 2000/04**

(51) Int Cl.[7]: **B23B 5/32**

(21) Anmeldenummer: **95104793.5**

(22) Anmeldetag: **31.03.1995**

(54) **Verfahren und Einrichtung zum Fixieren von Radsätzen von Schienenfahrzeugen im Rotationszentrum**

Process and device for locating wheelsets of railroad vehicles in the center of rotation

Procédé et dispositif pour le fixage d'essieux montés de véhicules sur rails au centre de rotation

(84) Benannte Vertragsstaaten:
**CH DE ES FR GB IT LI**

(30) Priorität: **08.04.1994  DE 4412074**

(43) Veröffentlichungstag der Anmeldung:
**25.10.1995  Patentblatt 1995/43**

(73) Patentinhaber: **NILES-SIMMONS Industrieanlagen GmbH D-09117 Chemnitz (DE)**

(72) Erfinder:
 • **Robotta, Reinhard
   D-09306 Erlau (DE)**
 • **Schröter, Gunter
   D-09116 Chemnitz (DE)**
 • **Thomas, Volker
   D-09227 Einsiedel (DE)**
 • **Naumann, Hans J.
   Albany, New York 12204 (US)**

(74) Vertreter: **Grättinger & Partner (GbR) Postfach 16 55 82306 Starnberg (DE)**

(56) Entgegenhaltungen:
   **DE-A- 1 402 955          FR-A- 1 256 588
   US-A- 3 203 286**

**Beschreibung**

Ein Verfahren und eine Einrichtung zum Fixieren von Radsätzen von Schienenfahrzeugen im Rotationszentrum ohne formschlüssige Zentrierung des Radsatzes, wie z. B. über Körnerspitzen oder durch Unterstützung an Achslagergehäusen, wird durch am Umfang der Räder des Radsatzes über Teile des Profils, insbesondere der Lauffläche, angreifende Rollen angewendet.
Als Radsatz wird in dieser Beschreibung jede mögliche Art eines Radsatzes, auch die Einzelradaufhängung im Fahrzeug, und als Rollen werden in dieser Beschreibung Reibrollen und Stützrollen sowie die Kombination daraus verstanden.

Die Räder eines Radsatzes unterliegen Verschleiß und sollen mittels Radsatzbearbeitungsmaschinen ein gleichmäßiges und konzentrisch zur Radsatzmitte liegendes Profil erhalten. Um aus einem zu reprofilierenden Rad ein rundes Rad, konzentrisch zur Radsatzmitte, zu erhalten, muß bei der Bearbeitung das Maß zwischen Werkzeug und Drehmitte konstant gehalten werden. Dazu wurden Lösungen bekannt, die entweder das Werkzeug zum Radsatz vertikal nachführen oder den Radsatz mittels mechanisch gekoppelten Rollen oder mit über einzelne Hubeinrichtungen aber nur im Gleichlauf verfahrbaren Rollen nur in vertikaler Richtung zur Radsatzmitte nachführen.

So wird in DE-AS 12 00 097 das Werkzeug mittels eines an der Radsatzachse befindlichen federbelasteten Tasters in Abhängigkeit von der Verschiebung der Radsatzmitte vertikal verstellt. Aus Abweichung vom Sollwert, gleichgültig ob Flachstellen oder Aufwerfungen, resultiert aber zwangsläufig bei Antrieb über nur gemeinsam in gleicher Lage angedrückten Rollen am Radumfang eine Verschiebung der Radsatzmitte in vertikaler und horizontaler (in Schienenlängsrichtung) Richtung. Die Lageveränderungen der Radsatzmitte in horizontaler Richtung können durch eine Bewegung des Werkzeuges in vertikaler Richtung nur unvollständig ausgeglichen werden. Diese horizontalen Verschiebungen können bis zum Verschieben des gesamten Fahrzeuges führen. Auf alle Fälle tritt jedoch eine Entlastung der einen und eine zusätzliche Belastung der zweiten Rolle des mechanisch gekoppelten Rollenpaares ein. Insgesamt ist diese Lösung, insbesondere die Führungseinrichtung des Werkzeuges, sehr störanfällig im robusten Betrieb einer Eisenbahnreparaturwerkstatt.

Mit der späteren Entwicklung nach DE-OS 14 02 955, das den nächstliegenden Stand der Technik darstellt, beseitigt deshalb derselbe Erfinder die vorgenannte Störanfälligkeit dadurch, daß er die Korrektur zur Erzeugung eines konzentrischen Kreises zur Radsatzmitte nicht mehr über die vertikale Werkzeugzustellung vorsieht, sondern bewegliche Rollen dafür vorschlägt. Diese Rollen sind gewollt mechanisch miteinander gekoppelt und nur in dieser Kopplung verfahrbar. Selbst in einer Ausgestaltung der Lösung, mit jeder Rolle einzeln zugeordnetem Hydraulikzylinder und Verstellung jeder Rolle über ca. 45° geneigte Bettführungen wird über eine Querverbindungsstange die Kopplung und damit der Gleichlauf der Rollen bewußt herbeigeführt, so daß auch diese Ausgestaltung in der Summe nur vertikal ausgleichen kann. Verschiebung der Radsatzmitte in horizontaler Richtung führt wiederum, wie bei der o. g. Lösung nach DE-AS 12 00 097, zwangsweise zur Verschiebung des Fahrzeuges bzw. zur o. g. Änderung der Aufstandskräfte an den Rollen. Daraus resultieren Fehler bei der Profilierung. Die sich ändernden Aufstandskräfte an den Rollen führen unter gleichzeitiger Einwirkung der Schnittkräfte bei der Bearbeitung zu einem instabilen Zustand.
Besonders nachteilig sind diese Störungen bei der Bearbeitung von gummigefederten Radsätzen.

Mit DE-OS 39 31 747 wird für die Überflurbearbeitung ausgebauter und in Zentriermitteln aufgenommener Radsätze eine Lösung vorgeschlagen, die eine Minimierung der Zentrierkräfte als Zielstellung hat. Dabei wird nachgewiesen, daß mechanische Zentrierungen (Zentrierspitzen oder Achslagergehäuseunterstützung), selbst bei der Bearbeitung ausgebauter Radsätze in Überflurradsatzbearbeitungsmaschinen, Kräfte benötigen, die dem Raedsatzgewicht entgegenwirken. Die Kompensation der Werkzeugkräfte ist u. a. vom Radsatzdurchmesser, vom Verhältnis der Schnittkräfte und vom Werkzeugverschleiß abhängig. Keine der vorgeschlagegen Lösungen kann auf Zentriermittel, wie Zentrierspitzen oder Lagergehäuseabstützung, verzichten.
Weiterhin ist bekannt, daß eine axiale Radsatzzentrierung und Fixierung durch Andrücken zusätzlicher axialer Führungsrollen an die inneren Radstirnflächen realisiert wird.
Dabei ist besonders nachteilig, daß die Unebenheiten der Stirnflächen übertragen werden.

Der in den Hauptansprüchen angegebenen Erfindungen liegt das Problem zugrunde, eine ständige Fixierung der Achsmitte des Radsatzes im Rotationszentrum in vertikaler und horizontaler Richtung während der Drehung des Radsatzes ohne Anwendung zusätzlicher Zentrierkräfte zu erreichen.

Unter ständiger Fixierung eines Radsatzes soll die Fixierung sowohl in vertikaler und horizontaler x, y-Richtung, in der Ebene rechtwinklig zur Rotationsmitte, als auch in einer horizontalen z-Richtung parallel zur Radsatzachse verstanden werden.

Erfindungsgemäß wird die Aufgabe mit den in den Hauptansprüchen angegebenen Merkmalen dadurch gelöst, daß an einem in Bearbeitungsunterlage befindlichen Radsatz folgende Verfahrensschritte durchgeführt werden:

- Festlegung mindestens eines Meßpunktes mit zuordenbaren Bezug zur Rotationsmitte,
- gleichzeitig mit dem Drehen des Radsatzes wird

• der Meßpunkt in zwei voneinander unabhängigen Richtungen in der Ebene rechtwinklig zur Rotationsmitte verfolgt und

• aus den ermittelten Abweichungen zur Ausgangslage des Meßpunktes in den beiden Richtungen der Meßpunkt durch Lageregelung festgehalten.

Der festgelegte Meßpunkt wird verdrehfest zum Radsatz, aber verschiebbar, in den Richtungen x, y angeordnet. Der Meßpunkt kann vorzugsweise am nicht rotierenden Außenteil des Lagergehäuses angebracht werden. Andererseits kann bei der Einzelradbearbeitung auch die Zentriermitte des Radsatzes als Meßpunkt angenommen werden. Für die horizontale z-Richtung wird mindestens ein rotierender Meßpunkt an der Stirnfläche des Rades angebracht.

Als Meßpunkt und Meßgerät kann auch ein in zwei Richtungen messender Beschleunigungsmesser verwendet werden.

Erfindungsgemäß wird dazu eine Einrichtung mit beweglich angeordneten Rollen vorgeschlagen, die dadurch gekennzeichnet ist, daß:

- mindestens zwei voneinander unabhängig bewegliche Rollen pro Rad angeordnet sind,

- eine erste Rolle mit einer ersten regelbaren Hubeinrichtung beweglich an einem ersten Aufstandspunkt angeordnet ist,

- eine zweite Rolle über eine zweite regelbare Hubeinrichtung beweglich an einem zweiten Aufstandspunkt angeordnet ist,

- pro Radsatzseite an einem Teil am Radsatz, das zuordenbaren Bezug zur Rotationsmitte hat, mindestens ein Meßpunkt angeordnet und/oder definiert ist und

- mindestens ein in der Ebene rechtwinklig zur Rotationsachse in zwei Richtungen messendes Meßgerät pro Rad vorgesehen ist,

- zur Übertragung der ermittelten Daten des Meßgerätes eine Auswerteinheit und/oder eine Steuereinheit zur Regelung der Hubeinrichtungen in Abhängigkeit von den ermittelten Daten des Meßgeräts angeordnet ist.

Die mit der Erfindung erreichten Vorteile bestehen insbesondere darin, daß:

- ständig der Abstand zwischen Rotationsmitte und Werkzeug in vertikaler und horizontaler Richtung konstant gehalten wird,

- geringste Verschiebungen der Rotationsmitte des Radsatzes bei Drehung des Rades in zwei voneinander unabhängigen Richtungen (x, y) in einer Ebene annähernd senkrecht zur Rotationsachse erfaßt und über zwei unabhängig voneinander weggesteuerte Rollen in horizontaler und vertikaler Richtung korrigiert werden,

- ohne Freilegen der Zentrierbohrungen, den damit verbundenen Montage- und Demontageaufwand, Verschmutzungsgefahr und Gefahr des Garantieverlustes, und

- ohne Vorbearbeiten des Profils ein ständiges Fixieren im Rotationszentrum selbst eines grob verschlissenen Radsatzes oder eines gummigefederten Radsatzes ermöglicht wird, wobei

- gleichzeitig hohe Laufgenauigkeit und

- ein hoher Automatisierungsgrad

- ohne zusätzliche Zwangskräfte erreicht

- ständig die Radstirnfläche in einer horizontalen Richtung (z) in einer vorbestimmten Lage bzw. schlagfrei gehalten wird.

Vorteilhafterweise kann der Meßpunkt für die z-Richtung an der inneren Stirnfläche des Rades angebracht werden. Ausgangsbasis für die von einem Meßgerät ermittelte Lage können die durch Vorvermessung mittels einer bekannten Meßeinrichtung vorhandenen Daten sein. Die Fixierung erfolgt in z-Richtung über regelbare Rollen, axial führend, am Radprofil.

Eine vorteilhafte Ausgestaltung der Erfindung ist im Patentanspruch 3 dadurch angegeben, daß an jeder regelbaren Hubeinrichtung mindestens eine Wegmeßeinrichtung angeordnet ist.

Eine weitere vorteilhafte Ausgestaltung der Erfindung wird im Patentanspruch 4 dadurch erreicht, daß die Rollen vorzugsweise so angeordnet sind, daß die Richtung ihrer jeweiligen Lageregelungsbewegung annähernd mit jeweils den Meßrichtungen eines Meßgerätes zur Erfassung der Verschiebung des Meßpunktes übereinstimmen.

Weiterhin ist es nach Patentanspruch 5 vorteilhaft, daß statt einzelner beweglicher Rollen Rollenpaare, vorzugsweise mit kippbarer Anordnung in einem Rollenpaargehäuse, angeordnet sind. Im Patentanspruch 6 wird eine weitere vorteilhafte Ausgestaltung der Erfindung dadurch erreicht, daß statt Wegmeßeinrichtungen Winkelmeßeinrichtungen oder eine Kombination beider angeordnet sind.

Darüberhinaus ist es nach Anspruch 7 vorteilhaft, daß statt der Meßeinrichtung ein in der Ebene rechtwinklig zur Rotationsmitte in zwei Richtungen messender Beschleunigungsmesser mit zweifacher Integration und interner oder externer Signalverarbeitung an einem Achslagergehäuse oder einem anderen Radsatzbezugsteil angeordnet ist.

Vorteilhafterweise ist die erfinderische Radsatzfixiereinrichtung gemäß Patentanspruch 8 mit nur einem nur in eine Richtung messendem Meßgerät oder einem Beschleunigungsmesser, vorzugsweise mit berührungsloser Datenübertragung, versehen.

Gemäß Anspruch 9 ist die Radsatzfixiereinrichtung integraler Bestandteil einer Radsatzausrichteinrichtung in einer Radsatzbearbeitungsmaschine.

Gemäß Anspruch 10 ist die erfinderische Einrichtung in einer Radsatzmeßmaschine angeordnet.

Vorteilhafte Ausgestaltungen der Erfindungen werden durch die Ansprüche 11 und 12 vorgeschlagen. Damit ist die genaue axiale Lagefixierung, auch unter dem Einfluß der durch die Bearbeitung aufgebrachten Kräfte, die einem Stirnschlag bewirken, gewährleistet.

Die Erfindung wird nachfolgend an einem bevorzugten aber beispielhaften Ausführungsbeispiel näher erläutert. Die Bearbeitungswerkzeuge werden mit Absicht nicht angeführt, da die Erfindung bei allen Bearbeitungsverfahren, wie z. B. Drehen, Fräsen oder Schleifen, anwendbar ist.
Es zeigen

Figur 1 Rad mit Flachstelle in zwei Drehlagen
Figur 2 Radsatzfixierung in z-Richtung

Dabei werden folgende Bezugszeichen gewählt:

1 Rad (mit Flachstelle in Lage 1 bei Drehwinkel φ)
1' Rad (mit Flachstelle in Lage 1' bei Drehwinkel φ')
2 Achsmitte des Radsatzes (dargestellt in Lage 2 bei Drehwinkel φ)
2' Achsmitte des Radsatzes (dargestellt in Lage 2' bei Drehwinkel φ')
3 Meßpunkt (dargestellt in Lage 3 bei Drehwinkel φ)
3' Meßpunkt (dargestellt in Lage 3' bei Drehwinkel φ)
4 Achslagergehäuse (dargestellt in Lage 4 bei Drehwinkel φ')
4' Achslagergehäuse (dargestellt in Lage 4' bei Drehwinkel φ')
5 erste Rolle
6 zweite Rolle
7 erste Hubeinrichtung
8 zweite Hubeinrichtung
9 erste Wegmeßeinrichtung
10 zweite Wegmeßeinrichtung
11 erster Aufstandspunkt
12 zweiter Aufstandspunkt
13 Meßgerät
14 Meßpunkt der Stirnfläche
15 Radsatzachse z
16 Hubeinrichtung z
17 Meßgerät stirnseitig
18 Wegmeßeinrichtung axial

Der in einem Schienenfahrzeug eingebaute Radsatz wird vorzugsweise, aber nicht notwendigerweise, ausgerichtet und zentriert oder in die Bearbeitungslage in der Radsatzbearbeitungsmaschinen gebracht. Während der Bearbeitung und dem Messen sollte der Radsatz, um die erforderliche Genauigkeit zu erzielen, in Zentrierlage fixiert werden.
Dazu sind:

- mindestens zwei getrennt und von anderen unabhängig bewegliche Rollen angeordnet

- eine Rolle 5 über eine Hubeinrichtung 7 von einer Wegmeßeinrichtung 9 kontrolliert beweglich an einem Aufstandspunkt 11 angeordnet,
- eine Rolle 6 über eine Hubeinrichtung 8 von einer Wegmeßeinrichtung 10 kontrolliert beweglich an einem Aufstandspunkt 12 angeordnet,
- die Bewegungsachsen der Hubeinrichtung 7 und der Hubeinrichtung 8 sind zweckmäßigerweise winkel symmetrisch angeordnet, wobei es optimal ist, wenn sich die Hubeinrichtungen im Drehpunkt des Radsatzes annähernd schneiden,
- am nicht rotierenden Achslagergehäuse ein Meßpunkt angeordnet und
- ein in der Ebene annähernd rechtwinklig zur Rotationsmitte in zwei Richtungen messendes Meßgerät 13
- eine nicht dargestellte Auswerteinheit angeordnet.

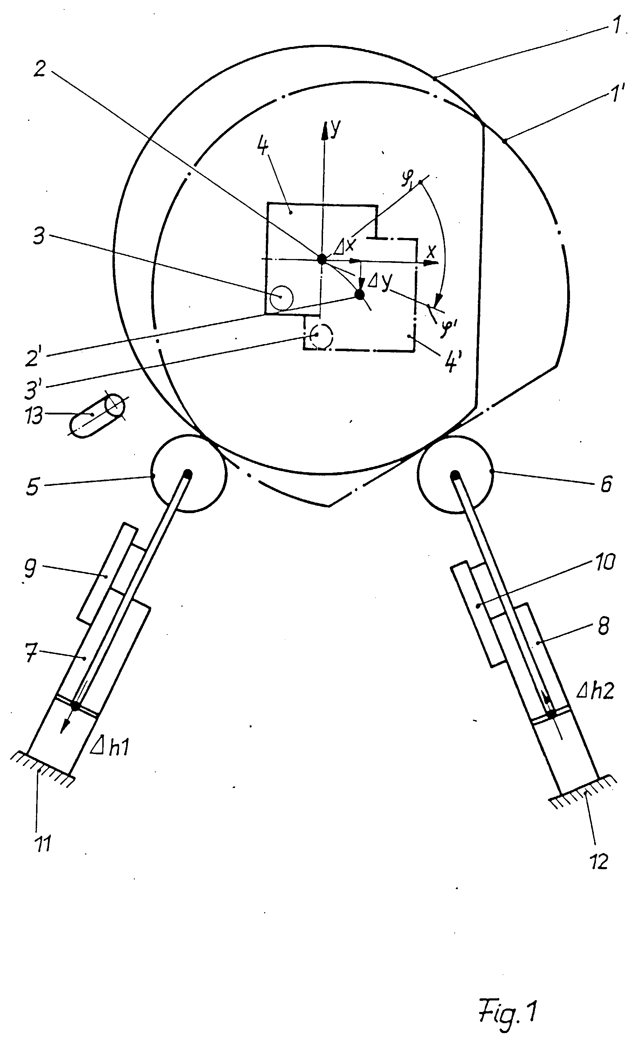

Die Fig. 1 zeigt, daß das Rad 1 (mit Flachstelle in Lage 1 bei Drehwinkel φ) von der Rolle 5 und der Rolle 6, die jeweils mit der lagegeregelten Hubeinrichtung 7 und der davon unabhängig lagegeregelten Hubeinrichtung 8 verbunden sind, zentriert wird. Dabei sind die Bewegungsachsen der Hubeinrichtung 7 und der Hubeinrichtung 8 entsprechend dem Raumangebot bei der Unterflurbearbeitung gewählt. Am Achslagergehäuse, in dem der Radsatz rotiert, ist der Meßpunkt an einer beliebigen zugänglichen Stelle angebracht. Seine horizontale Verschiebung (x-Achse) und vertikale Verschiebung (y-Achse) wird durch ein raumfestes Meßgerät 13 vorzugsweise berührungslos erfaßt.
Bei Drehung des Rades 1 (mit Flachstelle in Lage 1 bei Drehwinkel φ) in die Winkelstellung φ' befindet sich dasselbe in der Lage des Rades 1' (mit Flachstelle in Lage 1' bei Drehwinkel φ') und die Flachstelle bewegt sich auf die Rolle 6, ohne den Kontakt mit dieser Rolle 6 zu verlieren. Damit verschiebt sich die Achsmitte des Radsatzes 2 (dargestellt in Lage 2 bei Drehwinkel φ) als Rotationsmitte zu Achsmitte des Radsatzes 2' (dargestellt in Lage 2' bei Drehwinkel φ'). Diese Lageveränderung ist als $\delta x$ und $\delta y$ dargestellt, wobei sich das Achslagergehäuse 4 (dargestellt in Lage 4 bei Drehwinkel φ) zum Achslagergehäuse 4' (dargestellt in Lage 4' bei Drehwinkel φ') und in dessen Folge der Meßpunkt 3 (dargestellt in Lage 3 bei Drehwinkel φ) zu Meßpunkt 3' (dargestellt in Lage 3' bei Drehwinkel φ') bewegt.
Aus den bekannten Durchmessern der Rolle 5 und der Rolle 6 sowie den bekannten Stellungen der Hubeinrichtung 7 und der Hubeinrichtung 8 zum zugehörigen festen Aufstandspunkt 11 und Aufstandspunkt 12, die über die zugehörigen Wegmeßeinrichtung 9 und Wegmeßeinrichtung 10 erfaßt werden, existieren feste Beziehungen in Verbindung mit den Verschiebungen $\delta x$ und $\delta y$ zu den Nachstellhüben $\delta h1$ und $\delta h2$. Somit stehen die Meßergebnisse des Meßgerätes 13 und die Stellung der Hubzylinder der Hubeinrichtung 7 und der Hubeinrichtung 8 über eine Auswerteinheit und die Steuerung in folgender Wirkverbindung:

Korrektur in x-Richtung

$$\delta\,h1 = f(\delta x)$$

$$\delta\,h2 = f(\delta x)$$

Korrektur in y-Richtung

$$\delta\,h1 = f(\delta y)$$

$$\delta\,h2 = f(\delta y)$$

Bei einer Auslagerung des Meßpunkt um $\delta x$ und $\delta y$ überlagern sich die Funktionen entsprechend. Nach diesen Funktionen regeln die Hubzylinder der Hubeinrichtung 7 links in Figur 1 um den Weg $\delta$ h1 und der Hubeinrichtung 8 rechts um den Weg $\delta$ h2 unabhängig voneinander und über diese Funktionen zusammenwirkend so nach, daß trotz Flachstelle beim Winkel φ' aufstehend auf der Rolle 6 die Achsmitte des Radsatzes 2' (dargestellt in Lage 2' bei Drehwinkel φ') wieder in die Lage der Achsmitte des Radsatzes 2 (dargestellt in Lage 2 bei Drehwinkel φ) gebracht wird. Da bereits bei geringsten Verschiebungen in horizontaler und/oder vertikaler Richtung die Korrektur der Lage der Achsmitte des Radsatzes in ihre Ausgangslage bzw. in eine den Genauigkeitsvorgaben bei der Radsatzbearbeitung jeweils vorzugebende tolerierende Ausgangslage erfolgt, ist gewährleistet, daß sich praktisch die Achsmitte des Radsatzes nicht bzw. nur in der vorgegebenen Toleranz verlagert bei gleichzeitigen ständigen Kontakt der fehlstellenbehafteten Lauffläche des Rades mit beiden Rollen.

Anstelle der Flachstelle können auch beliebige Fehlstellen vorhanden sein, wie Aufwerfungen, Formfehler, Exzentrizität usw.

Die Einrichtung ist auch funktionstüchtig, wenn sich unterschiedliche Fehlstellen gleichzeitig über beide Rollen bewegen.

Selbstverständlich können mit erhöhten Rechenaufwand auch die Meßrichtungen des Meßgerät 13 wesentlich von einer Ebene annähernd rechtwinklig zur Rotationsachse abweichen. Auch kann die Messung mit jeweils zwei in jeweils eine Richtung messenden Meßgeräten erfolgen.

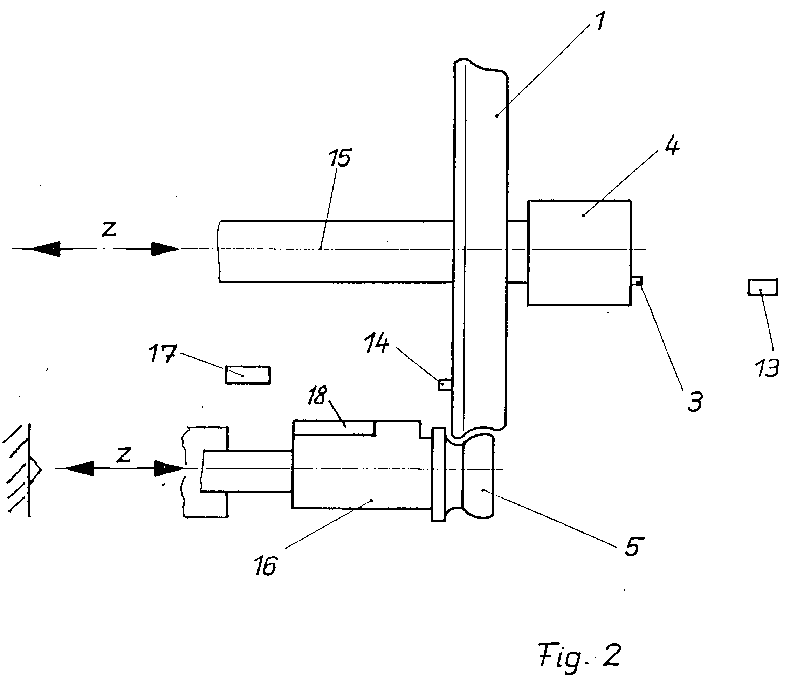

In Fig. 2 wird die Radsatzfixierung in einer z-Richtung dargestellt. Vorzugsweise kann dazu der Meßpunkt (14) mit Meßgerät (17) verwendet werden. Die Abweichungen werden über eine Auswerteinheit in Verbindung mit der Maschinensteuerung den Hubeinrichtungen (16) und der Meßeinrichtung (18) geregelt. Vorzugsweise werden drei Meßpunkte an einer Stirnfläche festgelegt.

Vorteilhafterweise ist die beschriebene Einrichtung in der Gesamtmaschine für Radsatzbearbeitung zu jedem Rad des Radsatzes, also zweimal, vorhanden, so daß eine Fixierung und/oder Zentrierung beider Räder des Radsatzes gleichzeitig erfolgen kann.

Weiterhin ist es vorteilhaft, wenn statt des Meßgeräts 13 und des am Achslagergehäuse angebrachten Meßpunkt 3 ein in der Ebene rechtwinklig zur Rotationsmitte in zwei Richtungen messender Beschleunigungsmesser mit zweifacher Integration und interner oder externer Signalverarbeitung am Achslagergehäuse oder einem anderen Radsatzbezugsteil angebracht wird.

Selbstverständlich kann jede Messung, z. B. in vertikaler und horizontaler Richtung, jeweils durch einen Meßpunkt und ein zugehöriges Meßgerät bzw. durch zwei in jeweils nur eine Richtung messende Beschleunigungsmesser, vorzugsweise mit berührungsloser Datenübertragung, separat ausgeführt werden.

Werden die Rollen zur Anlage über Träger angeschwenkt, so ist es selbstverständlich möglich, daß statt Wegmeßeinrichtungen Winkelmeßeinrichtungen angeordnet sind.

Sollen mehr als zwei Rollen angebracht werden, so können diese vorteilhafterweise in paarweise kippbarer Anordnung in Rollengehäusen angeordnet werden.

In einer weiteren Ausgestaltung der Erfindung ist es möglich, bei gefederten Radsätzen, z. B. gummigefederten Radsätzen, die Anbringung des Meßpunktes 3 nicht am Lagergehäuse vorzunehmen, da Radreifen und Radachse in ihrer Lage nicht definiert sind, sondern an einem geeigneten Radsatzteil, vorzugsweise am Radreifen, das ebenfalls Bezug zum Rotationszentrum hat.

Durch Wechsel des nicht dargestellten Werkzeuges gegen ein Meßzeug kann sowohl eine separate oder eine in einer Radsatzbearbeitungsmaschine integrierte Radsatzmeßeinrichtung erhalten werden.

Eine bevorzugte Ausführungsform der Erfindung wird durch eine gleichzeitige axiale Radsatzfixierung vorgeschlagen. Entsprechend der aus der Vorvermessung ermittelten Daten wird eine ideale Lage der Stirnfläche fixiert. Etwaige Unebenheiten der Stirnfläche sind ohne Einfluß auf die Zentrierung und Fixierung und werden lediglich als Führungsgröße, innerhalb einer vorgegebenen Toleranz durch Regelung berücksichtigt. Damit wird die vorbestimmte Genauigkeit durch axiale Fixierung gewährleistet.

**Patentansprüche**

1.  Verfahren zum Fixieren von Radsätzen von Schienenfahrzeugen im Rotationszentrum in Bearbeitungsmaschinen durch Nachführen von an etwaigen rundlauffehlerbehafteten Radsätzen angreifenden Rollen,
    dadurch gekennzeichnet,
    daß mindestens ein Meßpunkt (3) festgelegt wird, der einen zuordenbaren Bezug zur Rotationsmitte hat, und daß gleichzeitig mit dem Drehen des Radsatzes der Meßpunkt (3) in zwei voneinander unabhängigen Richtungen (x, y) in der Ebene rechtwinklig zur Rotationsmitte verfolgt und aus den ermittelten Abweichungen zur Ausgangslage des Meßpunktes in den beiden Richtungen der Meßpunkt durch Lageregelung festgehalten wird.

2.  Einrichtung zum Fixieren von Radsätzen von Schienenfahrzeugen im Rotationszentrum in Bearbeitungsmaschinen mit Rollen,
dadurch gekennzeichnet,
daß

- mindestens zwei voneinander unabhängig bewegliche Rollen pro Rad angeordnet sind,
- eine erste Rolle (5) mit einer ersten regelbaren Hubeinrichtung (7) beweglich an einem ersten Aufstandpunkt (11) angeordnet ist,
- eine zweite Rolle (6) über eine zweite regelbare Hubeinrichtung (8) beweglich an einem zweiten Aufstandpunkt (12) angeordnet ist,
- pro Radsatzseite an einem Teil am Radsatz, das zuordenbaren Bezug zur Rotationsmitte hat mindestens ein Meßpunkt (3) angeordnet und/oder definiert ist und
- mindestens ein in der Ebene rechtwinklig zur Rotationsmitte in zwei Richtungen messendes Meßgerät (13) pro Rad vorgesehen ist,
- zur Übertragung der ermittelten Daten des Meßgerätes (13) eine Auswerteinheit und/oder eine Steuereinheit zur Regelung der Hubeinrichtungen (7, 8) in Abhängigkeit von den ermittelten Daten des Meßgeräts (13) angeordnet ist.

3.  Einrichtung nach Anspruch 2,
dadurch gekennzeichnet,
daß an jeder regelbaren Hubeinrichtung (7, 8) mindestens eine Wegmeßeinrichtung (9, 10) angeordnet ist.

4.  Einrichtung nach Anspruch 2,
dadurch gekennzeichnet,
daß die Rollen vorzugsweise so angeordnet sind, daß die Richtung ihrer jeweiligen Lageregelungsbewegung annähernd mit jeweils den Meßrichtungen eines Meßgerätes (13) zur Erfassung der Verschiebung des Meßpunktes (3) übereinstimmt.

5.  Einrichtung nach Anspruch 2 oder 4,
dadurch gekennzeichnet,
daß statt einzelner beweglicher Rollen (5, 6) Rollenpaare, vorzugsweise mit kippbarer Anordnung in einem Rollenpaargehäuse, angeordnet sind.

6.  Einrichtung nach Anspruch 3,

dadurch gekennzeichnet,
daß statt Wegmeßeinrichtungen (9, 10) Winkelmeßeinrichtungen oder eine Kombination beider angeordnet sind.

7.  Einrichtung nach Anspruch 2,
dadurch gekennzeichnet,
daß statt dem Meßgerät (13) ein in der Ebene rechtwinklig zur Rotationsmitte in zwei Richtungen messender Beschleunigungsmesser mit zweifacher Integration und interner oder externer Signalverarbeitung an einem Achslagergehäuse oder einem anderen Radsatzbezugsteil angeordnet ist.

8.  Einrichtung nach Anspruch 2,
dadurch gekennzeichnet,
daß statt einem in zwei Richtungen tastendem Meßgerät (13) ein berührungslos in mindestens eine Richtung messendes Meßgerät oder ein Beschleunigungsmesser, vorzugsweise mit berührungsloser Datenübertragung, angeordnet ist.

9.  Einrichtung nach Anspruch 2 bis 8,
dadurch gekennzeichnet,
daß sie integraler Bestandteil in einer Radsatzausrichteinrichtung ist.

10. Einrichtung nach Anspruch 2 bis 9,
dadurch gekennzeichnet,
daß diese Einrichtung in einer Radsatzmeßmaschine angeordnet ist.

11. Verfahren nach Anspruch 1,
dadurch gekennzeichnet,
daß zusätzlich mindestens ein Meßpunkt festgelegt wird, der einem zuordbaren Bezug zur inneren Stirnfläche des Rades hat und in einer horizontalen Z-Richtung parallel zur Radsatzachse (15) durch Lageregelung mindestens einer Rolle (5) festgehalten wird.

12. Einrichtung nach Anspruch 2 zur Durchführung des Verfahrens nach Anspruch 11,
dadurch gekennzeichnet,
daß zusätzlich

- mindestens ein Meßpunkt (14) mit einem Meßgerät (17),
- mindestens eine in Z-Richtung regel- und verschiebbare Rolle (5) in Verbindung über eine Meßeinrichtung (18) und Hubeinrichtung (16),
- eine Auswerteinheit zur Übertragung der ermittelten Daten zur Regelung der Hubeinrichtung angeordnet ist.

## Claims

1. A method for locating wheelsets of railroad vehicles in the center of rotation in truing machines by following-up rollers being contiguous with probably faulty wheelsets, characterised in that:
at least one measuring point (3) is defined with assignable reference to the center of rotation and, simultaneously with the rotation of wheelset, measuring point (3) is tracked in two directions irrespectively of each other (x, y) in the plane orthogonally to the center of rotation and, on the basis of detected offsets with regard to the default position of measuring point in both directions, said measuring point is retained by position control.

2. A device for locating wheelsets of railroad vehicles in the centre of rotation in truing machines with rollers, characterised in that:

   - at least two rollers movable irrespectively of each other are provided for each wheel,
   - a first roller 5 with a first adjustable lifting device 7 is movably arranged at a first tread point 11,
   - a second roller 6 with a second adjustable lifting device 8 is movably arranged at a second tread point 12,
   - at least one measuring point 3 is disposed and/ or defined for either side of wheelset on a part of wheelset having got an assignable reference to the center of rotation, and
   - at least one encoder 13 measuring in both directions is provided in the plane orthogonally to the center of rotation for each wheel,
   - one evaluating unit and/or control unit is provided for transmission of data detected by encoder 13 to control the lifting devices 7, 8 in dependence on the data detected by encoder 13.

3. A device as recited in Claim 2, characterised in that:
at least one encoder 9, 10 is disposed on each adjustable lifting device 7, 8.

4. A device as recited in Claim 2, characterised in that:
the rollers are preferably arranged so that the direction of their respective position control movement approximately complies with the respective measuring directions of an encoder 13 to detect the offset of measuring point 3.

5. A device as recited in Claims 2 or 4, characterised in that:
roller pairs, preferably in tiltable arrangement within a roller pair housing, are provided instead of individual movable rollers 5, 6.

6. A device as recited in Claim 3, characterised in that:
instead of linear encoders 9, 10, angular encoders or a combination of both are provided.

7. A device as recited in Claim 2, characterised in that:
an accelerometer measuring in two directions in the plane orthogonally to the center of rotation with double integration and internal or external signal processing is arranged at an axlebox case or another reference part of wheelset instead of encoder (13).

8. A device as recited in Claim 2, characterised in that:
a non-contact encoder measuring in at least one direction or an accelerometer, preferably with non-contact data transmission, are provided instead of an encoder (13) detecting in two directions.

9. A device as recited in Claims 2 through 8, characterised in that:
said device is an integral part of a wheelset aligning device.

10. A device as recited in Claims 2 through 9, characterised in that:
said device is integrated in a wheelset measuring machine.

11. A method as recited in Claim 1, characterised in that:
at least one measuring point has to be additionally defined with assignable reference to the inner face of wheel being stabilised by position control of at least one roller (5) in horizontal Z-direction and in parallel to the wheelset axle (15).

12. A device as recited in Claim 2 for performing the method as recited in Claim 11, characterised in that:

    - at least one measuring point (14) with an encoder (17),
    - at least one roller (5) controllable and slidable in Z-direction in conjunction with a measuring device (18) and a lifting device (16),
    - an evaluating unit for transmitting the detected data to control the lifting device are additionally provided.

## Revendications

1. Procédé de fixation d'essieux montés de chemin de fer au centre de rotation sur les machines de reprofilage par des galets qui viennent prendre en charge les roues d'un même essieu présentant éventuellement des faux-ronds, caractérisé en ce que l'on définit au moins un point de mesure (3) ayant un rapport affectable au centre de rotation et que, l'essieu monté étant en rotation, le point de mesure (3) est poursuivi dans deux directions indépendantes l'une de l'autre (x, y) dans le plan rectangulaire au centre de rotation et le point de mesure est maintenu par asservissement de position compte tenu des écarts déterminés de la position initiale du point de mesure dans les deux directions.

2. Dispositif de fixation d'essieux montés de chemin de fer au centre de rotation sur les machines de reprofilage par des galets, caractérisé en ce que

   - l'on place au moins deux galets mobiles indépendants l'un de l'autre par roue,
   - l'on place un premier galet mobile (5) avec un premier dispositif de déplacement asservi (7) à un premier point de contact (11),
   - l'on place un deuxième galet mobile (6) avec un deuxième dispositif de déplacement asservi (8) à un deuxième point de contact (12),
   - l'on place et/ou définit au moins un point de mesure (3) par côté d'essieu monté sur un élément d'essieu monté ayant un rapport affectable au centre de rotation,
   - l'on prévoit au moins un appareil de mesure (13) par roue mesurant en deux directions dans le plan rectangulaire au centre rotation,
   - l'on place, pour la transmission des données déterminées par l'appareil de mesure (13), une unité d'évaluation et/ou une unité de commande d'asservissement des dispositifs de déplacement (7, 8) en fonction des données déterminées par l'appareil de mesure (13).

3. Dispositif selon la revendication 2, caractérisé en ce que l'on place au moins un dispositif de mesure de déplacement (9, 10) sur chaque dispositif de déplacement asservi (7, 8).

4. Dispositif selon la revendication 2, caractérisé en ce que l'on place les galets de préférence de façon à ce que la direction de leur mouvement dû à l'asservissement de position soit à peu près conforme à la direction de mesure d'un appareil de mesure (13) de saisie du décalage du point de de mesure (3).

5. Dispositif selon la revendication 2 ou 4, caractérisé en ce que l'on place, au lieu des galets mobiles individuels (5, 6), des paires de galets, de préférence à basculement dans une boîte de paire de galets.

6. Dispositif selon la revendication 3, caractérisé en ce que l'on place, au lieu des dispositifs de mesure de déplacement (9, 10), des dispositifs de mesure angulaire ou une combinaison de ces deux dispositifs.

7. Dispositif selon la revendication 2, caractérisé en ce que l'on place, au lieu de l'appareil de mesure (13), un accéléromètre à double intégration et à traitement de signaux interne ou externe mesurant en deux directions dans le plan rectangulaire au centre de rotation sur un corps de boîte d'essieu ou un autre élément de référence de l'essieu monté.

8. Dispositif selon la revendication 2, caractérisé en ce que l'on place, au lieu d'un appareil de mesure (13) mesurant en deux directions, un appareil de mesure mesurant sans contact en au moins une direction ou un accéléromètre, de préférence à transmission de données sans contact.

9. Dispositif selon les revendications 2 à 8, caractérisé en ce qu'il fait partie intégrante d'un dispositif de positionnement des essieux montés.

10. Dispositif selon les revendications 2 à 9, caractérisé en ce que l'on place ce dispositif sur une machine à mesurer les essieux montés.

11. Procédé selon la revendication 1, caractérisé en ce que l'on définit, en plus, au moins un point de mesure ayant un rapport affectable à la face latérale interne de la roue et maintenu dans une direction horizontale z parallèle à l'arbre d'essieu (15) par asservissement de position d'au moins un galet (5).

12. Dispositifselon la revendication 2 pour la réalisation du procédé selon la revendication 11, caractérisé en ce qu'en plus,

   - on place au moins un point de mesure (14) associé à un appareil de mesure (17),
   - on place au moins un galet asservi et déplaçable en direction z (5) solidaire d'un dispositif de mesure (18) et d'un dispositif de déplacement (16),
   - on place une unité d'évaluation pour la transmission des données déterminées pour l'asservissement du dispositif de déplacement.

Fig.1

Fig. 2